# EUROPEAN PATENT APPLICATION

(11) **EP 4 254 113 A1**
(43) Date of publication of application: **04.10.2023**
(21) Application number: 23163755.4
(22) Date of filing: 23.03.2023
(51) Int. Cl.: G05B 23/02

(54) **INFORMATION PROCESSING SYSTEM, INFORMATION PROCESSING METHOD AND INFORMATION PROCESSING PROGRAM**

(30) Priority: 01.04.2022 JP 2022061489
(71) Applicant: OMRON Corporation, Kyoto 600-8530 (JP)
(72) Inventor: KAWANOUE, Shinsuke, Kyoto-shi, 600-8530 (JP)
(74) Representative: Mewburn Ellis LLP

(57) **Abstract**

An information processing system (1) includes: a generator (262) configured to generate a control flow graph from an abstract syntax tree corresponding to source code (234) of a user program (132; 258); a formulator (270) configured to formulate an inter-variable dependence (280) by searching a variable which depends upon a variable used in the user program based on the control flow graph; a search module (268) configured to search a variable deemed to be a fixed value in variables used in the user program; and an update module (264) configured to update the inter-variable dependence by reflecting the variable deemed to be a fixed value on the source code.

## Description

### BACKGROUND OF THE INVENTION

### Field of the Invention

The present invention relates to an information processing system, an information processing method, and an information processing program.

### Description of the Background Art

Conventionally, manufacturing apparatuses and production lines in various technical fields are operated under the control of control devices, for example, PLC (programmable logic controller). In an event that some kind of trouble occurs in a manufacturing apparatus or a production line, the following two approaches may be typically available. One of them is estimating and/or sensing a causal factor(s) of the trouble from the physical condition of the apparatus or production line, and the other is identifying a causal factor(s) of the trouble by analyzing a program for operation control.

The former approach, which largely relies on an operator's work experiences and instincts, may hardly be a versatile solution. The latter approach has been disclosed in the known art, which is described below.

International Publication, WO2014/097379, discloses an apparatus for use in debugging in a production facility using a display device and operation buttons. This apparatus is allowed to extract, from vast and very complex dependences (directed graph), a particular dependence (directed graph) deeply involved with an ongoing or latent bug(s) in the facility and then display the extracted dependence with a fewer number of operational steps.

The technology described in Japanese Patent Laying-Open No. 2018-206362 is aimed at accurate modeling of a cause-and-effect relationship between two or more mechanisms of a production line.

### SUMMARY OF THE INVENTION

In WO2014/097379 described earlier, forward or backward inter-device dependences are extracted from a ladder program. This, however, may end up with extracting all of dependences among devices included in the ladder program. As a result, an elaborate dependence directed graph may be generated from such very complex inter-device dependences. Besides, the directed graph thus generated may become even more elaborate as the program volume increases, which may possibly demand more labor to estimate what caused or is causing any trouble to be addressed.

The present invention is directed to providing a method for further simplifying inter-variable dependences of variables included in a user program.

According to an example of the present invention, an information processing system is provided. The information processing system includes: a generator configured to generate a control flow graph from an abstract syntax tree corresponding to source code of a user program; a formulator configured to formulate an inter-variable dependence by searching a variable which depends upon a variable used in the user program based on the control flow graph; a search module configured to search a variable deemed to be a fixed value in variables used in the user program; and an update module configured to update the inter-variable dependence by reflecting the variable deemed to be a fixed value on the source code.

In the system thus configured, the inter-variable dependence is first formulated, and any variable deemed to be a fixed value is then reflected on the source code to update the inter-variable dependence. In this manner, the inter-variable dependence may be presented in a more simplified manner.

The search module may be configured to obtain time-series data corresponding to a variable stored in a control device and determine that the time-series data is deemed to be a fixed value when a distribution index of the obtained time-series data satisfies a predefined reference. In the system thus configured, any variable may be deemed to be a fixed value when the variable does not change at all and also when the variable does not change to an allowable extent. Thus, the inter-variable dependence may be presented in a more simplified manner.

The search module may be configured to preferentially select, from variables involved with the inter-variable dependence, a variable having a relationship of dependence with a greater number of variables and determine whether the selected variable is deemed to be a fixed value. Thus, any variable having a relationship of dependence with a greater number of variable may be preferentially determined, which may allow more efficient update of the inter-variable dependence.

The generator may be configured to generate a control flow graph using an intermediate representation generated by converting the source code of the user program. Use of an intermediate representation instead of the source code per se may allow the control flow graph to be more efficiently generated.

The information processing system may further include an output unit configured to generate and output a graph of the updated inter-variable dependence. The output unit may be configured to visualize the inter-variable dependence in a manner that is centered on an optionally selected variable. This may help a user to easily recognize and grasp the inter-variable dependence.

The output unit may be configured to visualize variables in different display manners according to types of the variables. This may help a user to easily know and understand variables having a relationship of dependence with each other, for example, purposes and adjustability of such variables.

The formulator may be configured to generate a graph of the updated inter-variable dependence by searching, based on the updated inter-variable dependence, another variable which each variable depends upon. Thus, a graphical presentation may be generated in which variables are each a base point.

The graph of the updated inter-variable dependence may be a directed graph. The updated inter-variable dependence may include a direction of the inter-variable dependence. This may help a user to instantly grasp where the dependence is directed.

According to another example of the present invention, an information processing method implemented by a computer is provided. The information processing method includes: generating a control flow graph from an abstract syntax tree corresponding to source code of a user program; formulating an inter-variable dependence by searching a variable which depends upon a variable used in the user program based on the control flow graph; searching a variable deemed to be a fixed value in variables used in the user program; and updating the inter-variable dependence by reflecting the variable deemed to be a fixed value on the source code.

According to yet another example of the present invention, an information processing program is provided. The information processing program prompts a computer to perform: generating a control flow graph from an abstract syntax tree corresponding to source code of a user program; formulating an inter-variable dependence by searching a variable which depends upon a variable used in the user program based on the control flow graph; searching a variable deemed to be a fixed value in variables used in the user program; and updating the inter-variable dependence by reflecting the variable deemed to be a fixed value on the source code.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram that schematically illustrates an information processing system according to an embodiment.
Fig. 2 is a block diagram that illustrates an exemplified hardware configuration of a control device in the information processing system according to the embodiment.
Fig. 3 is a block diagram that illustrates an exemplified hardware configuration of an information processing apparatus in the information processing system according to the embodiment.
Fig. 4 is a flow chart that illustrates steps of a dependence determining process in the information processing system according to the embodiment.
Fig. 5 is a diagram that illustrates static slicing performed by the information processing system according to the embodiment.
Fig. 6 is a diagram that illustrates backward slicing performed by the information processing system according to the embodiment.
Fig. 7 is a diagram that illustrates forward slicing performed by the information processing system according to the embodiment.
Fig. 8 is a diagram that illustrates partial evaluation slicing performed by the information processing system according to the embodiment.
Fig. 9 is a diagram that illustrates partial evaluation slicing performed by the information processing system according to the embodiment.
Fig. 10 is a flow chart that illustrates in detail the processing step S2 of Fig. 4.
Fig. 11 is a diagram that schematically illustrates an exemplified dependence database generated by the information processing system according to the embodiment.
Fig. 12 is a flow chart that illustrates in detail the processing step S7 of Fig. 4.
Fig. 13 is a block diagram that schematically illustrates an exemplified functional configuration of the information processing system according to the embodiment.
Fig. 14 is a diagram that illustrates an example of use of the dependence determining process according to the embodiment.

### DESCRIPTION OF THE PREFERRED EMBODIMENTS

An embodiment of the invention is hereinafter described referring to the accompanying drawings. The same or similar components and units in the drawings are simply illustrated with the same reference signs, redundant description of which will basically be omitted.

### <A. Example of application>

First, an exemplified situation is given and described below to which the invention is applicable. In the description given below, some kind of trouble is assumed to be occurring in a manufacturing apparatus or production line. The invention, however, may be applicable to any optional applications in which inter-variable dependences are employed.

In this specification, the term, "target to be controlled", refers to an optional object directly or indirectly relevant to computations for control executed by a control device. The term, "target to be controlled", may include, in addition to a manufacturing apparatus or production line that receives commands outputted from a control device, any device(s) directly or indirectly engaged in or involved with the manufacturing apparatus or production line.

In this specification, the term "variable" encompasses, in its scope, storage location for data optionally defined in source code. In the embodiment described below, the term "variable" may encompass, in its scope, "device variable"; storage prepared for values obtained by an input device like sensor and/or values supplied to an optional device like motor or relay, "adjustment parameter"; storage prepared for values updated in response to a user's inputs in a user program, and "command variable" prepared for use in command instances like function blocks and functions.

The device variable may include "input variable" and "output variable". The "command variable" is equivalent to a variable associated with actuator control functions.

The "variable" may be classified into "global variable" that can be referenced by a plurality of POU (Program Organization Unit) devices and "local variable" that can only be referenced by a particular POU device.

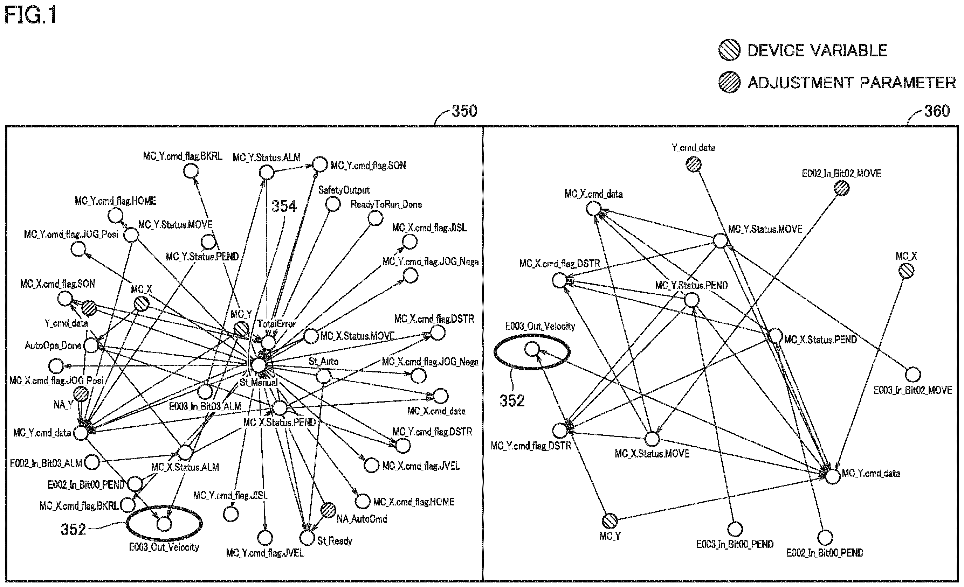

Fig. 1 is a diagram that schematically illustrates an information processing system 1 according to an embodiment. With reference to Fig. 1, a cause-and-effect model 350 is a graphical presentation of inter-variable dependences of variables included in a user program. Cause-and-effect model 350 may be a directed graph with indications of dependence directions.

Fig. 1 shows an example in which a dependence determining process according the embodiment is applied to a processing device. In the given example, the processing device is hypothetically having some trouble in adjustment of an X-axis moving speed. In this instance, an operator takes notice of "E003_Out_Velocity" (command variable: code 352); variable indicating the X-axis moving speed.

A large number of inter-variable dependences are depicted in cause-and-effect model 350 illustrated in Fig. 1. In any event that the X-axis moving speed needs to be adjusted, an automatic mode is a basic operation mode, with a manual mode being inactive. The variable indicating the manual mode, "ST_Manual (code 354), therefore, may be "False" (manual mode INACTIVE) at all times.

This variable is then fixed to "St_Manual=[False]", which dissolves some dependences included in cause-and-effect model 350. Thus, dependence model 350 may be ultimately simplified, as illustrated in a cause-and-effect model 360.

This may help an operator to grasp that an adjustment parameter, "Y_cmd_data", may possibly have some kind of impact on a variable "E003_Out_Velocity".

In cause-and-effect model 350 of Fig. 1, variables are visualized in different display manners according to types of the variables (for example, whether they are device variable or adjustment parameter).

Information processing system 1 according to the embodiment searches any variable deemed to be a fixed value in all of the variables used in the user program. This system 1 then sets the variable(s) deemed to be a fixed value to a fixed value, thus simplifying the inter-variable dependences. The inter-variable dependences of variables included in the user program may be thus simplified.

### <B. Hardware Configuration>

Next, a description is given below to the hardware configuration of a principal device in information processing system 1 according to the embodiment.

### (b1. Hardware configuration of control device 100)

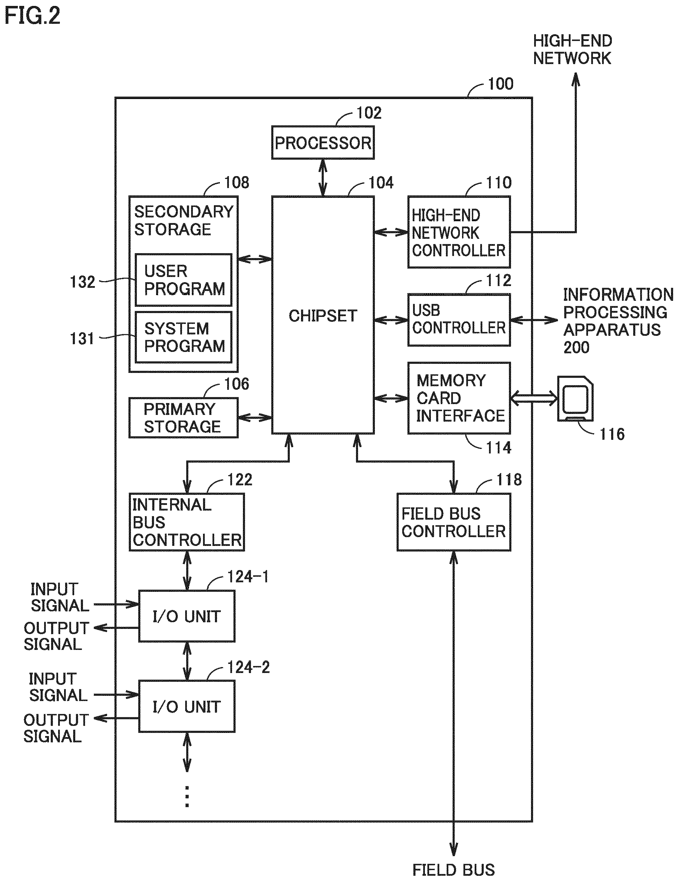

Fig. 2 is a block diagram that illustrates an exemplified hardware configuration of a control device 100 in information processing system 1 according to the embodiment. With reference to Fig. 2, control device 100 may be a computer, for example, PLC (programmable logic controller).

More specifically, control device 100 may include a processor 102, for example, CPU (Central Processing Unit) or MPU (Micro-Processing Unit), a chipset 104, a primary storage 106, a secondary storage 108, a high-end network controller 110, a USB (Universal Serial Bus) controller 112, a memory card interface 114, a field bus controller 118, an internal bus controller 122, and I/O units 124-1, 124-2,..., and other I/O units numbered likewise.

Processor 102 reads programs stored in secondary storage 108 and then loads and runs the read programs in primary storage 106 to perform processes for control of a target to be controlled. Chipset 104 controls data transmission between processor 102 and the other units and components.

In secondary storage 108 is stored a system program 131 that offers a platform for computations for control (PLC engine described later). In addition to this system program, secondary storage 108 also stores therein a user program 132 that defines processes associated with the computations for control. User program 132 is an object type program (object code).

High-end network controller 110 controls the data communication through a high-end network to and from the other apparatuses. USB controller 112 controls the data communication to and from information processing apparatus 200 through USB connection.

Memory card interface 114 is detachably mountable with a memory card 116, so that various pieces of data (for example, user program, trace data) can be written in and read from memory card 116.

Internal bus controller 122 is an interface for data communication to and from I/O units 124-1, 124-2,..., mounted to control device 100.

Field bus controller 118 transmits and receives data to and from a field device(s) through a field bus 2. Field bus 2 may preferably be compliant with a communication protocol for industrial use. Known examples of the communication protocol may include EtherCAT (registered trademark), EtherNet/IP (registered trademark), DeviceNet (registered trademark), and CompoNet (registered trademark).

Fig. 2 shows an example in which processor 102 runs the program to enable the functional features required. Instead, the functional features, in part or in whole, may be implemented using a dedicated hardware circuit (for example, ASIC (Application Specific Integrated Circuit) or FPGA (Field-Programmable Gate Array). The principal unit of control device 100 may be actualized using a hardware device configured in compliance with a general-purpose architecture (for example, industrial personal computer derived from general-purpose computer). In this instance, the virtualization technology may be employed, in which two or more operating systems (OS) for different uses may be operated in parallel, and necessary applications may be executed on the OSs.

### (b2: Exemplified hardware configuration of information processing apparatus 200)

Information processing apparatus 200 according to the embodiment may be actualized through a program run by a hardware device that complies with a general-purpose architecture (for example, general-purpose architecture).

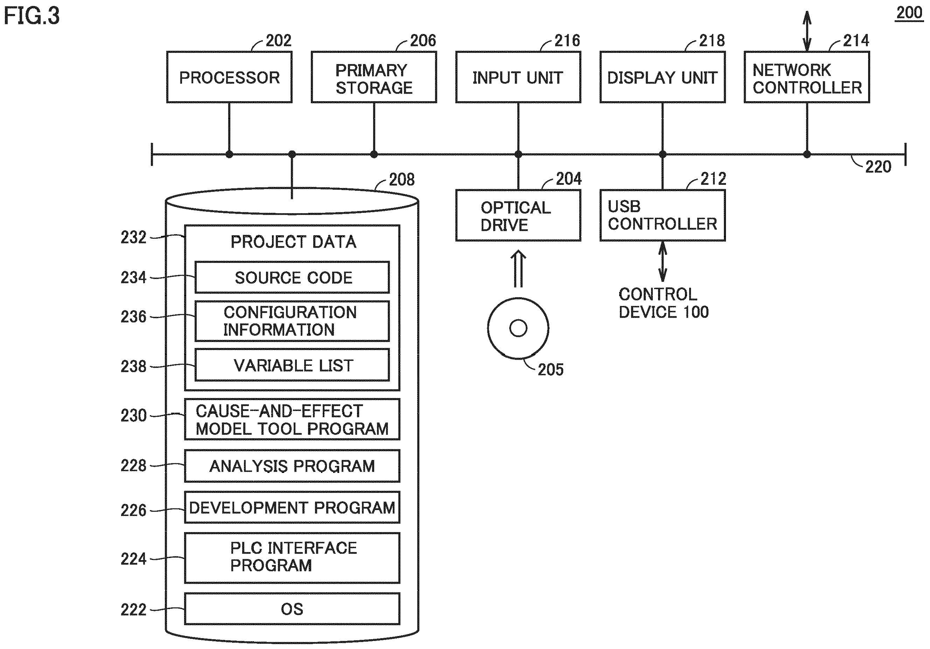

Fig. 3 is a block diagram that illustrates an exemplified hardware configuration of information processing apparatus 200 in information processing system 1 according to the embodiment. With reference to Fig. 3, information processing apparatus 200 includes a processor 202, for example, CPU or MPU, an optical drive 204, a primary storage 206, a secondary storage 208, a USB controller 212, a network controller 214, an input unit 216, and a display unit 218. These structural elements are interconnected through a bus 220.

Processor 202 reads programs stored in secondary storage 208 and then loads and runs the read programs in primary storage 206 to perform processes described later.

Secondary storage 208 may include, for example, HDD (Hard Disk Drive) and/or SSD (Flash Solid State Drive). The following OS and programs may be typically stored in secondary storage 208; OS 222, PLC interface program 224 for necessary data communication with control device 100, development program 226 for creation of a user program (source code) run in information processing apparatus 200, debugging of the created user program, and setting of system architecture definitions and parameters, analysis program 228 that enables an analyzing process described later, and cause-and-effect model tool program 230 for exhibition of analysis results. These programs, in part or in whole, constitute an information processing program. Any necessary programs, other than those illustrated in Fig. 3, may be stored in secondary storage 208.

In secondary storage 208 is also stored project data 232 corresponding to user program 132 run by control device 100. Project data 232 contains a source code 234 that describes commands included in user program 132, configuration information 236 that describes definitions of control device 100 and connected devices, and a variable list 238 that describes a list of variables used in user program 132.

Information processing apparatus 200 is equipped with optical drive 204. Computer-readable programs are non-transitorily stored in and read from a storage medium 205 (for example, optical storage medium such as DVD (Digital Versatile Disc)). The read programs are then installed into, for example, secondary storage 208.

The programs run by information processing apparatus 200 may be installed through computer-readable storage medium 205. Instead, the programs may be downloaded from a server device on the network and then installed into the storage. The functional features of information processing apparatus 200 according to the embodiment may be enables by using some of the modules provided by OS 222.

USB controller 212 controls the data communication with control device 100 through USB connection. Network controller 214 controls the data communication to and from the other apparatuses through an optional network.

Input unit 216 includes a keyboard and a mouse to receive inputs from a user. Display unit 218 includes a display, indicators and a printer to output, for example, processing results of processor 202.

In Fig. 3 is illustrated a structural example in which processor 202 runs the program to enable the required functional features. Instead, the functional features may be implemented, in part or in whole, using a dedicated hardware circuit (for example, ASIC or FPGA).

### <C. Processing steps>

Next, processing steps carried out in information processing system 1 according to the embodiment are hereinafter described.

### (c1: Overall process)

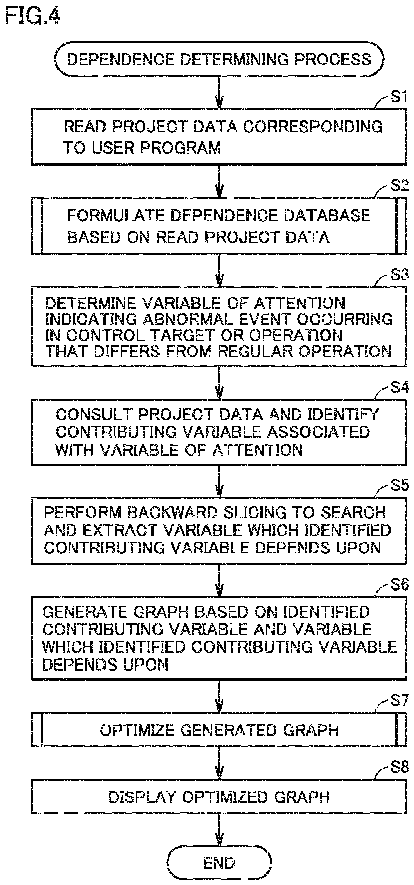

Fig. 4 is a flow chart that illustrates steps of a dependence determining process in information processing system 1 according to the embodiment. Typically, processor 202 of information processing apparatus 200 runs the program (for example, analysis program 228 illustrated in Fig. 3) to carry out the steps illustrated in Fig. 4.

With reference to Fig. 4, information processing apparatus 200 reads project data 232 corresponding to user program 132 run by control device 100; analysis target, (source code 234, configuration information 236, and variable list 238 (step S1). Then, information processing apparatus 200 formulates a dependence database based on the read project data 232 (step S2).

Information processing apparatus 200 determines a variable that indicates an abnormal operation or any operation that differs from regular operations in the target to be controlled (hereinafter, may be referred to as "variable of attention") (step S3). Such a variable of attention may be automatically determined in response to a user's input of an ongoing event in the target to be controlled. The variable of attention may be directly specified by a user or may be determined based on information of any event detected by control device 100.

Next, information processing apparatus 200, with reference to project data 232, identifies one or more variables associated with the variable of attention (hereinafter, may be referred to as "contributing variable(s)" (step S4). Information processing apparatus 200, using backward slicing, searches and extracts any variable which the identified contributing variable(s) depends upon (step S5). Information processing apparatus 200 generates a graph based on the identified contributing variable(s) and the variable(s) which the identified contributing variable(s) depends upon (step S6).

Then, information processing apparatus 200 optimizes the generated graph (step S7). Finally, information processing apparatus 200 displays the optimized graph (step S8). Information processing apparatus 200 generates and outputs a graph of the updated dependence database (updated inter-variable dependences).

Then, the dependence determining process ends with the graph output.

The dependence determining process according to the embodiment may employ partial evaluation slicing in addition to static slicing (forward slicing, backward slicing).

In this specification, the term "slicing" encompasses, in its scope, a process to identify any variable(s) associated with an optional variable.

### (c2: Static slicing)

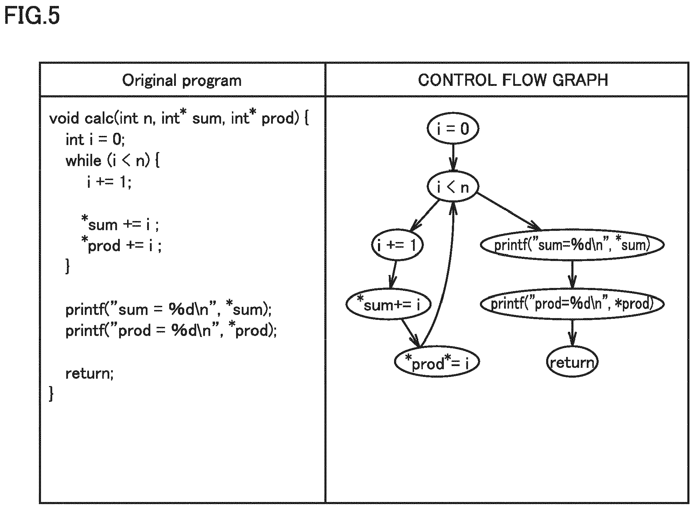

Fig. 5 is a diagram that illustrates static slicing performed by information processing system 1 according to the embodiment. With reference to Fig. 5, a control flow graph may be generated from a syntactic analysis result of the source code (original program) (or of an intermediate representation generated from the source code).

Backward slicing and/or forward slicing may be performed using such a control flow graph as illustrated in Fig. 5.

The backward slicing is a process to search and extract any variable which a target variable depends upon.

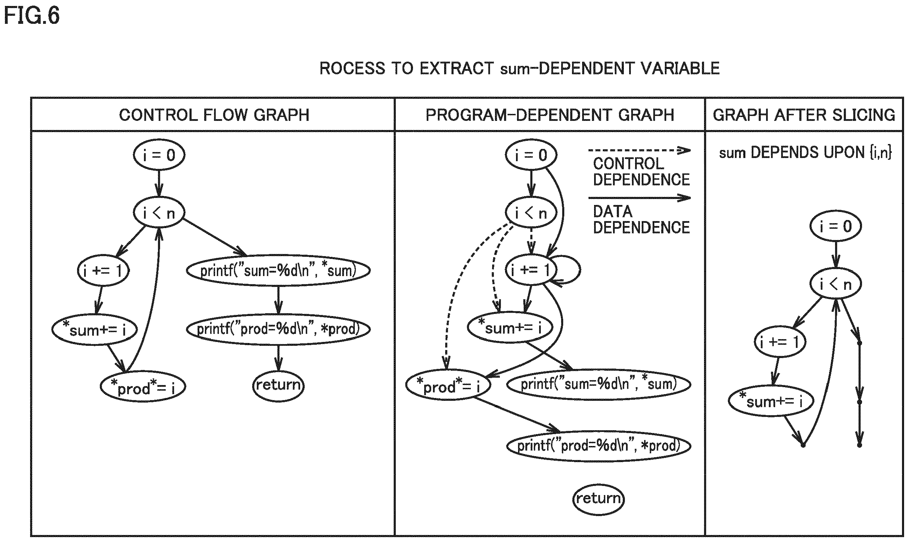

Fig. 6 is a diagram that illustrates the backward slicing performed by information processing system 1 according to the embodiment. The exemplified process illustrated in Fig. 6 extracts, using the control flow graph of Fig. 5, a variable(s) which a variable "sum" depends upon.

In the example of Fig. 6, a program dependence graph is generated from the control flow graph. The program dependence graph is a directed graph reflective of control dependence and data dependence of the source code. The control dependence represents dependence associated with decision of the source code execution order, while the data dependence represents dependence associated with update of the variable values in the source code.

In case a target variable changes depending on any other variable(s), the other variable(s) to be extracted should appear as the "variable(s) being used" until the target variable is finally defined.

Hence, the source code is sliced with a focus being placed on a row where the target variable is "finally defined" to collect partial programs. Then, the "variable(s) being used" is extracted from the collected partial programs. Thus, all of the other variables which the target variable depends upon may be successfully extracted.

In the examples of Figs. 5 and 6, variables "i", "n", "sum" and "prod" are used in the source code. The example of Fig. 6 illustrates a process to extract any variable which variable "sum" depends upon. The graph after the slicing illustrated on the right side of Fig. 6 is generated by analyzing the program dependence graph.

The example of Fig. 6 teaches that variable "sum" depends upon variable "i" and variable "n".

The forward slicing is a process to search and extract any variable which depends upon a target variable.

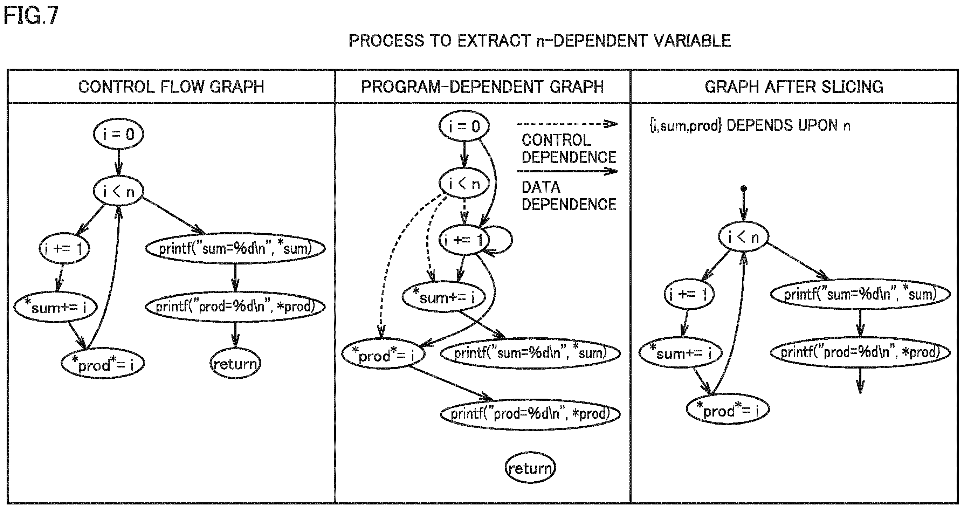

Fig. 7 is a diagram that illustrates the forward slicing performed by information processing system 1 according to the embodiment. The exemplified process illustrated in Fig. 7 extracts, using the control flow graph of Fig. 5, a variable(s) which depends upon variable "n".

In the example of Fig. 7, a program dependence graph is generated from the control flow graph. The program dependence graph is a directed graph reflective of control dependence and data dependence of the source code.

In case any variable changes depending on the target variable, a row having a relationship of control dependence with the target variable and/or a row having a relationship of data dependence with the target variable is traced after the target variable is first used, which continues until the source code's tail is reached. In the entire path leading to the source code's tail, variables that appeared as the "variable(s) to be defined" are collected. Thus, all of the variables which depend upon the target variable may be successfully extracted.

In the examples of Figs. 5 and 7, variables "i", "n", "sum" and "prod" are used in the source code. The example of Fig. 7 illustrates a process to extract any variable which depends upon variable "n". A graph after the slicing illustrated on the right side of Fig. 7 is generated by analyzing the program dependence graph.

The example of Fig. 7 teaches that variables "i", "sum" and "prod" depend upon variable "n".

As described earlier, information processing apparatus 200 according to the embodiment employs and performs, as the static slicing, forward slicing and backward slicing.

### (c3: Partial evaluation slicing)

Information processing system 1 according to the embodiment is allowed to perform partial evaluation slicing in addition to the static slicing. The partial evaluation slicing assigns values to some variables and then performs analysis to narrow down the inter-variable dependences to be extracted.

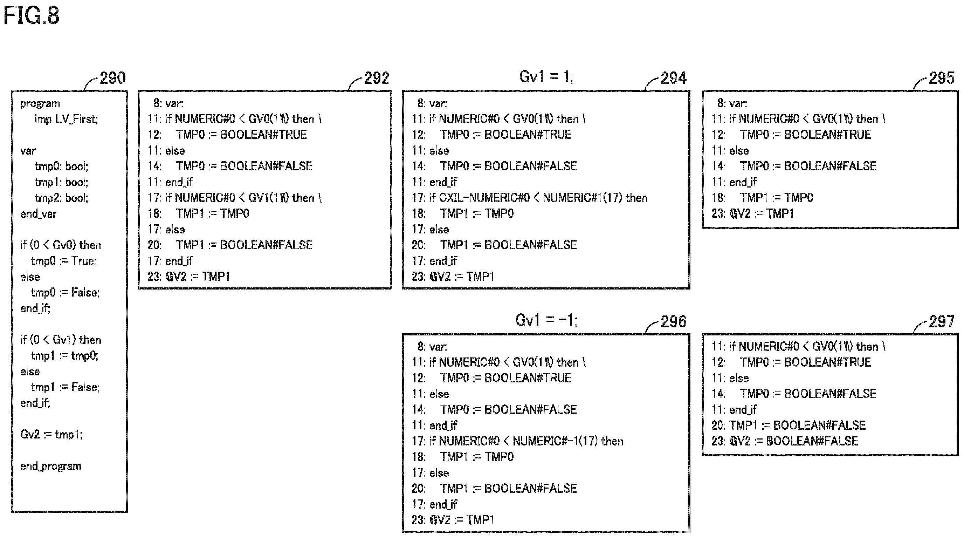

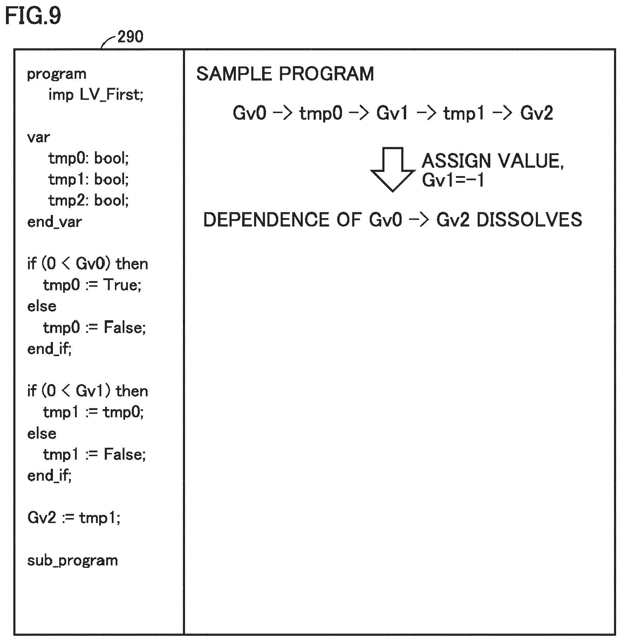

Figs. 8 and 9 are diagrams that illustrate the partial evaluation slicing performed by information processing system 1 according to the embodiment. Fig. 8 presents an example of source code; a source code 290, which uses three int-type global variables; variables "Gv0", "Gv1" and "Gv2". An intermediate representation 292 may be generated from source code 290.

Variables "Gv0" and "Gv1" are used in the condition of if statement. An example is given here, in which a certain value is assigned to variable "Gv1". An intermediate representation 294 when "1" is assigned to variable "Gv1" may be simplified into an intermediate representation 295. In the given example, the dependence of variable Gv0->variable tmp0->variable tmp1->variable Gv1 remains intact. An intermediate representation 296 when "-1" is assigned to variable "Gv1", on the other hand, may be simplified into an intermediate representation 297. In the given example, the dependence of variable Gv0->variable tmp0->variable tmp1->variable Gv1 dissolves.

As illustrated in Fig. 9, the dependence of variable Gv0->variable Gv2 may be dissolved by assigning "-1" to variable "Gv1" in source code 290.

To identify any contributing variable associated with an optional variable of attention, information processing system 1 may simplify any dependences relevant to the variable of attention provided that a condition under which the contributing variable is fixable to a specific value is satisfied.

The under which the contributing variable is fixable to a specific value may be, for example, a variable distribution index satisfying a predefined reference value (for example, less than or equal to a predetermined threshold).

Figs. 8 and 9 illustrate an exemplified process in which fixed values are reflected on the source code and intermediate representations. Instead, fixed values may be reflected upon an abstract syntax tree obtained through syntactic analysis of the program.

### (c4: Dependence database)

A description is given below to a process to formulate a dependence database (step S2) which is included in the processing steps of Fig. 4.

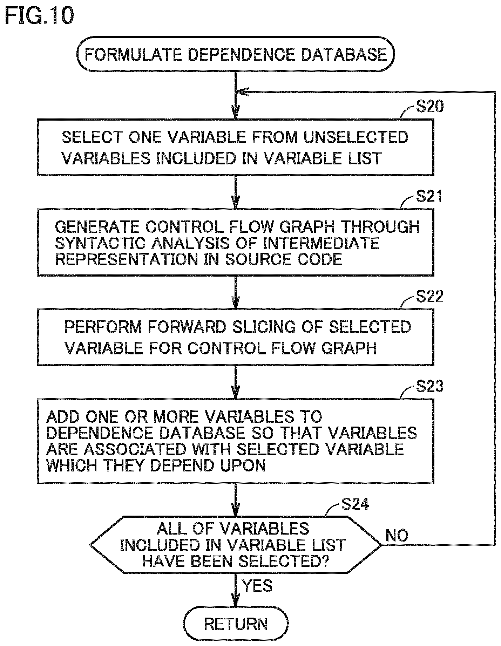

Fig. 10 is a flow chart that illustrates in detail the processing step S2 of Fig. 4. The process to formulate the dependence database includes generating a control flow graph corresponding to source code 234 of user program 132, and searching any variable(s) which depends upon the variables used in user program 132 based on the control flow graph to formulate inter-variable dependences.

Referring to Fig. 10, information processing apparatus 200 selects one variable from all of variables that are still unselected in variable list 238 of project data 232 (step S20). Then, information processing apparatus 200 generates a control flow graph (for example, see Fig. 5) through syntactic analysis of the intermediate representations in source code 234 of project data 232 (step S21).

Information processing apparatus 200 performs forward slicing of the selected variable for the control flow graph (step S22). Specifically, information processing apparatus 200 searches and extracts one or more variables which depend upon the selected variable. Then, information processing apparatus 200 adds one or more variables to the dependence database in a manner that these variables are associated with the selected variable which they depend upon (step S23).

Then, information processing apparatus 200 determines whether all of the variables included in variable list 238 of project data 232 have been selected (step S24). Unless all of the variables included in variable list 238 of project data 232 have been selected (NO in step S24), step S20 and steps thereafter are repeatedly carried out.

When the earlier step determines that all of the variables included in variable list 238 of project data 232 have been selected (YES in step S24), the process ends.

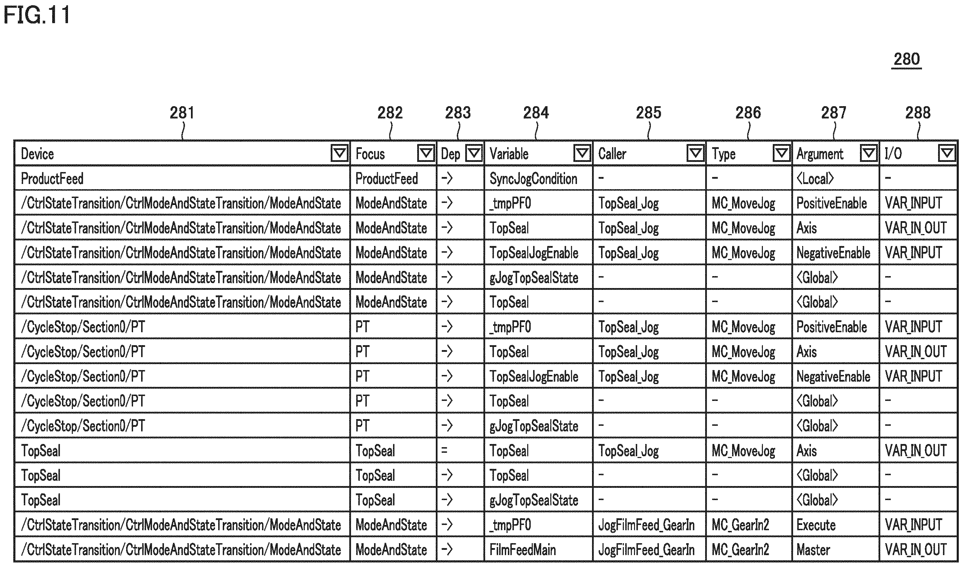

Fig. 11 is a diagram that schematically illustrates an exemplified dependence database 280 generated by information processing system 1 according to the embodiment. With reference to Fig. 11, dependence database 280 includes dependence-based entries. In case one variable has a relationship of dependence with two or more variables, dependence database 280 includes, for the one variable, as many entries as the two or more variables.

Specifically, dependence database 280 includes a first variable name column 281, a second variable name column 282, a dependence column 283, and a target variable name column 284. First variable name column 281 is the storage for target variable names (full paths). Second variable name column 282 is the storage for variable names at ending positions of full paths stored in first variable name column 281. Dependence column 283 is the storage for information on directions of inter-variable dependences. Target variable name column 284 is the storage for dependence-involving variable names.

Dependence database 280 further includes a caller column 285, a type column 286, a parameter column 287, and an input-output column 288. Caller column 285 serves to identify POU as target dependence caller. Type column 286 is the storage for information indicating caller POU types. Parameter column 287 indicates parameters in caller POU. Input-output column 288 is the storage for information indicating whether dependence-involving variables are each an input variable or device variable.

While variables classified as device variable are stored in first variable name column 281 in Fig. 11, variables classified as adjustment parameter may be stored in dependence database 280.

### (c5: Graph optimization)

A description is given below to a process to optimize the generated graph which is included in the processing steps of Fig. 4 (step S7).

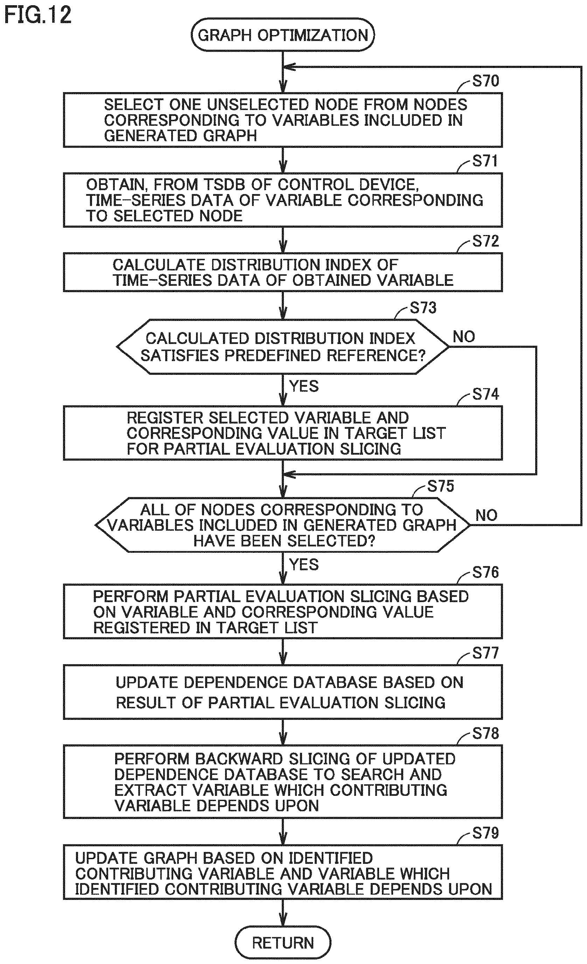

Fig. 12 is a flow chart that illustrates in detail the processing step S7 of Fig. 4. The graph optimizing process includes searching a variable(s) deemed to be a fixed value in all of the variables used in the user program, and reflecting the variable(s) deemed to be a fixed value on the source code to update the inter-variable dependences.

Referring to Fig. 12, information processing apparatus 200 selects a node yet to be chosen from all of nodes corresponding to the variables included in the generated graph (step S70). Optionally, a node with a greater number of edges may be preferentially selected. A variable (node) having a relationship of dependence with a greater number of variables may be preferentially selected from all of the variables involved with the inter-variable dependences to determine whether the variable is deemed to be a fixed value.

Next, information processing apparatus 200 obtains time-series data of the variable corresponding to the selected node from TSDB (Time Series Data Base) of control device 100 (step S71). Information processing apparatus 200 calculates the distribution index of time-series data of the obtained variable (value distribution) (step S72) and determines whether the calculated distribution index satisfies a predefined reference (step S73).

Step S73 determines whether the selected variable is deemed to be a fixed value. Supposing that the selected variable is a bool-type variable, with "True" for 99.9% or more and "False" for the remainder; 0.1% or less, of the obtained time-series data, the selected variable may be deemed to be a fixed value.

The process to search any variable deemed to be a fixed value may include obtaining the time-series data corresponding to the variable stored in control device 100 and determining that the time-series data is deemed to be a fixed value when the distribution index of the time-series data is determined as satisfying a predefined reference.

When the earlier step determines that the calculated distribution index satisfies the predefined reference (YES in step S73), information processing apparatus 200 registers the selected variable and corresponding value in a target list for partial evaluation slicing (step S74).

When the earlier step determines that the calculated distribution index fails to satisfy the predefined reference (NO in step S73), step S74 is skipped.

Then, information processing apparatus 200 determines whether all of the nodes corresponding to the variables included in the generated graph have been selected (step S75). Unless all of the nodes corresponding to the variables included in the generated graph have been selected (NO in step S75), step S70 and steps thereafter are repeatedly carried out.

When the earlier step determines that all of the nodes corresponding to the variables included in the generated graph have been selected (YES in step S75), information processing apparatus 200, in step S74, performs partial evaluation slicing based on the variables and corresponding values registered in the target list (step S76). Then, information processing apparatus 200 updates the dependence database based on the partial evaluation slicing result (step S77).

Next, information processing apparatus 200 performs backward slicing of the updated dependence database to search and extract a variable(s) which the contributing variable(s) included in the updated dependence database depends upon (step S78). Information processing apparatus 200 updates the graph based on the identified contributing variable(s) and the variable(s) which the identified contributing variable(s) depends upon (step S79). The updated graph is practically an optimized graph.

Thus, information processing apparatus 200 searches, based on the updated dependence database (updated inter-variable dependences), another variable which each variable depends upon and accordingly generates a graph of the updated inter-variable dependences.

Then, the process ends.

### <D. Exemplified functional features>

Next, exemplified functional features of information processing system 1 according to the embodiment are hereinafter described.

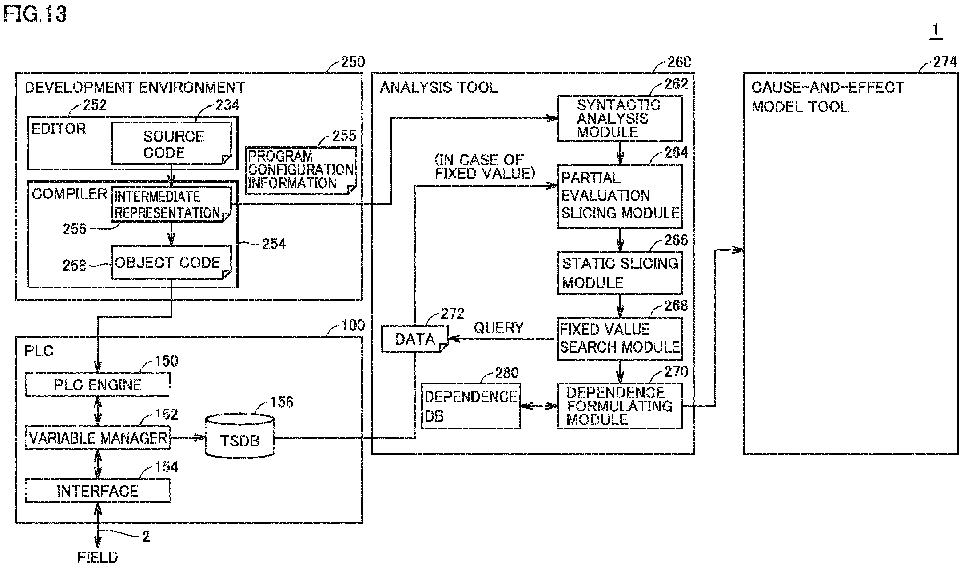

Fig. 13 is a block diagram that schematically illustrates an exemplified functional configuration of information processing system 1 according to the embodiment. With reference to Fig. 13, information processing system 1 includes, as its principal functional elements, control device 100, a development environment 250, an analysis tool 260, and a cause-and-effect model tool 274. Development environment 250, analysis tool 260 and cause-and-effect model tool 274 may be implemented into information processing apparatus 200. Development environment 250, analysis tool 260 and cause-and-effect model tool 274 may be dispersedly disposed in a plurality of computer resources (for example, information processing apparatuses 200).

Control device 100 is connected to a field device(s) through field bus 2. Control device 100 obtains input data, directly or through the field device, from a manufacturing apparatus or production line (may be collectively referred to as "field") and transmits output data to the field.

Control device 100 includes a PLC engine 150, a variable manager 152, an interface 154 and a TSDB 156.

PLC engine 150 carries out computations for control in accordance with user program 132.

Variable manager 152 manages values indicated by the variables that can be referenced from a program executed by control device 100. Variable manager 152 writes the values of preregistered variables in TSDB 156.

Interface 154 periodically transmits and receives data to and from the field. Such periodical data communication may be referred to as "I/O refreshing process".

TSDB 156 is the storage in which values of the preregistered variables are periodically storable. The time-series data is thus stored in TSDB 156.

Development environment 250 includes an editor 252 and a compiler 254. Editor 252 generates source code 234 in response to a user's operation. Compiler 254 analyzes source code 234 to generate intermediate representation 256 and further generates an object code 258. Compiler 254 generates program configuration information 255 when source code 234 is analyzed.

Analysis tool 260 includes a syntactic analysis module 262, a partial evaluation slicing module 264, a static slicing module 266, a fixed value search module 268, and a dependence formulating module 270.

Syntactic analysis module 262, corresponding to the generator, generates an abstract syntax tree corresponding to source code 234 of the user program (object code 258). Specifically, syntactic analysis module 262 may generate the abstract syntax tree using intermediate representations generated by converting (for example, compiling) source code 234 of the user program (object code 258). Syntactic analysis module 262 may consult program configuration information 255 for syntactic analysis. Finally, syntactic analysis module 262 generates a control flow graph from the abstract syntax tree and outputs the generated graph.

Partial evaluation slicing module 264 reflects any variable deemed to be a fixed value on the source code (or on the intermediate representation or abstract syntax tree) to update the inter-variable dependences. To be more specific, partial evaluation slicing module 264 performs the partial evaluation slicing using the variable deemed to be a fixed value to delete, from all of the dependences included in dependence database 280, any dependence(s) that can be dissolved.

Static slicing module 266 performs the static slicing (backward slicing and forward slicing).

Fixed value search module 268 searches any valuable(s) deemed to be a fixed value in all of the variables used in the user program. To be more specific, fixed value search module 268 selects a node(s) corresponding to the variable(s) included in the graph generated based on dependence database 280 and requests control device 100 (TSDB 156) to feed time-series data 272 of the variable(s) corresponding to the selected node(s). To obtain time-series data 272, fixed value search module 268 may typically transmit a query to control device 100. Fixed value search module 268 evaluates whether the target variable is deemed to be a fixed value.

Fixed value search module 268 may preferentially select, from all of the variables included in the inter-variable dependences, a variable (node) having a relationship of dependence with a greater number of variables and determine whether the variable is deemed to be a fixed value.

Dependence formulating module 270 formulates dependence database 280 and updates dependence database 280 based on processing results of, for example, slicing results. To be more specific, dependence formulating module 270 searches any variable(s) which depends upon the variables used in the user program based on the control flow graph and thereby formulates the inter-variable dependences. Dependence formulating module 270 outputs, to cause-and-effect model tool 274, a graph generated based on the formulated or updated dependence database 280 or a data set used to generate the graph.

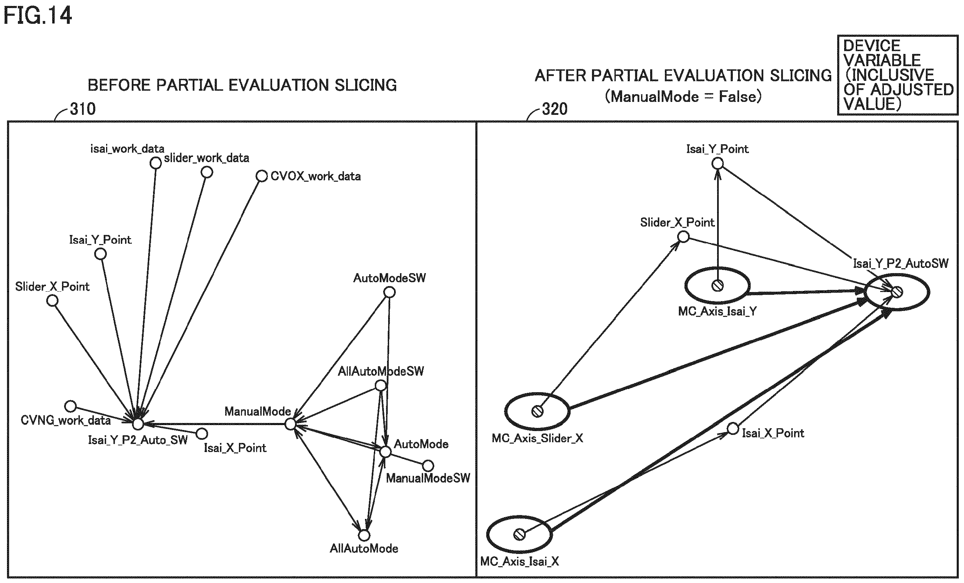

Cause-and-effect model tool 274 displays, to a user, a cause-and-effect model associated with the variable of attention. Cause-and-effect model tool 274 generates a graph of the formulated or updated dependence database 280 (updated inter-variable dependences) and outputs the generated graph. Cause-and-effect model tool 274 may visualize the inter-variable dependences so that they are centered on an optionally selected variable (for example, see Figs. 1 and 14). Cause-and-effect model tool 274 may additionally display any necessary information in response to a user's operation.

### <E. Examples of use>

Next, a description is given to examples of use of the dependence determining process according to the embodiment.

### (e1: First example of use)

A first example of use is hereinafter described. In this example, the dependence determining process according to the embodiment is applied to a robotaided, work transport mechanism. Fig. 14 is a diagram that illustrates a second example of use of the dependence determining process according to the embodiment.

In this example is assumed a dispatch mechanism undergoing malfunction of an automatic switch (AutoSW). In this instance, a variable, "Isai_Y_P2_AutoSW", which is a device variable indicative of sensor input value, may be affected by this trouble.

Fig. 14 shows a cause-and-effect model 310 before the partial evaluation slicing is performed and a cause-and-effect model 320 after the partial evaluation slicing is performed.

Cause-and-effect model 310 presents a large number of inter-variable dependences. Supposing that the automatic switch is malfunctioning, an automatic mode is a default setting, with a manual mode being inactive. Thus, a variable indicative of the manual mode, "ManualMode", may be "False" at all times.

By setting variable "ManualMode=[False]" as a fixed value, some dependences included in cause-and-effect model 310 may be dissolved. Thus, cause-and-effect model 310 may ultimately become as simple as cause-and-effect model 320.

This teaches that variable "ManualMode" may be affected to a certain extent by the adjustment parameters; variables "MC_Axis_Isai_X", "MC_Axis_Isai_Y", and MC_Axis_Slider_X".

The dependences may be more clearly visualized by thus focusing on possible impacts from an automatic mode operation regardless of any manual mode-related impacts.

### (e2: Second example of use)

The partial evaluation slicing in the dependence determining process according to the embodiment may allow deletion of any dependences that originate in unused logics included in the source code.

In a source code written in the form of a ladder program, Bool-type variables "P_On" and "P_Off", which always indicate fixed values, may be used as special variables. When variable "P_Off" is used, therefore, the inter-variable dependences may be formulated after being fixed to "False".

The dependences may be dissolved in regard to the variables used in logics executed under the condition of variable "P_Off", which may ultimately simplify the cause-and-effect model.

### <F. Advantages>

According to information processing system 1 of the embodiment, the inter-variable dependences generated based on the user program run by control device 100 are updated based on values actually stored in the variables. In this system, therefore, the inter-variable dependences may be presented in a more simplified manner. For any kind of trouble or malfunction, what is causing the trouble or malfunction may be more efficiently identified.

Further advantageously, a possible impact(s) when an adjustment parameter value(s) is changed may be successfully predicted beforehand by consulting the inter-variable dependence.

All of the embodiments are disclosed herein by way of illustration and example only and should not be construed as limiting by any means the scope of the present invention. The scope of the present invention is solely defined by the appended claims and is intended to cover the claims, equivalents, and all of possible modifications made without departing the scope of the present invention.

## Claims

1. An information processing system (1) comprising:
a generator (262) configured to generate a control flow graph from an abstract syntax tree corresponding to source code (234) of a user program (132; 258);
a formulator (270) configured to formulate an inter-variable dependence (280) by searching a variable which depends upon a variable used in the user program based on the control flow graph;
a search module (268) configured to search a variable deemed to be a fixed value in variables used in the user program; and
an update module (264) configured to update the inter-variable dependence by reflecting the variable deemed to be a fixed value on the source code.

2. The information processing system according to claim 1, wherein the search module is configured to obtain time-series data (272) corresponding to a variable stored in a control device (100) and determine that the obtained time-series data is deemed to be a fixed value when a distribution index of the obtained time-series data satisfies a predefined reference.

3. The information processing system according to claim 2, wherein the search module is configured to preferentially select, from variables involved with the inter-variable dependence, a variable having a relationship of dependence with a greater number of variables and determine whether the selected variable is deemed to be a fixed value.

4. The information processing system according to any one of claims 1 to 3, wherein the generator is configured to generate the control flow graph using an intermediate representation (256) generated by converting the source code of the user program.

5. The information processing system according to any one of claims 1 to 4, further comprising an output unit (270; 274) configured to generate a graph of the updated inter-variable dependence and output the graph, wherein
the output unit visualizes the inter-variable dependence in a manner that is centered on an optionally selected variable.

6. The information processing system according to claim 5, wherein the output unit is configured to visualize variables in different display manners according to types of the variables.

7. The information processing system according to any one of claims 1 to 6, wherein the formulator is configured to generate a graph of the updated inter-variable dependence by searching, based on the updated inter-variable dependence, another variable which each variable depends upon.

8. The information processing system according to any one of claims 1 to 7, wherein the graph of the updated inter-variable dependence is a directed graph, and
the updated inter-variable dependence includes a direction of the inter-variable dependence.

9. An information processing method implemented by a computer (200), the method comprising:
generating (S21) a control flow graph from an abstract syntax tree corresponding to source code (234) of a user program (132; 258);
formulating (S23) an inter-variable dependence (280) by searching a variable which depends upon a variable used in the user program based on the control flow graph;
searching (S71, S72, S73, S74) a variable deemed to be a fixed value in variables used in the user program; and
updating (S76, S77) the inter-variable dependence by reflecting the variable deemed to be a fixed value on the source code.

10. The information processing method according to claim 9, wherein the searching comprises obtaining (S71) time-series data (272) corresponding to a variable stored in a control device (100) and determining (S72, S73) that the obtained time-series data is deemed to be a fixed value when a distribution index of the obtained time-series data satisfies a predefined reference.

11. The information processing method according to claim 10, wherein the searching comprises preferentially selecting, from variables involved with the inter-variable dependence, a variable having a relationship of dependence with a greater number of variables and determining whether the selected variable is deemed to be a fixed value.

12. The information processing method according to any one of claims 9 to 11, wherein the generating comprises generating the control flow graph using an intermediate representation (256) generated by converting the source code of the user program.

13. The information processing method according to any one of claims 9 to 12, further comprising generating a graph of the updated inter-variable dependence and outputting the graph, wherein
the outputting the graph comprises visualizing the inter-variable dependence in a manner that is centered on an optionally selected variable.

14. The information processing method according to claim 13, wherein the outputting comprises visualizing variables in different display manners according to types of the variables.

15. An information processing program (226, 228, 230) that causes a computer (200) to perform:
generating (S21) a control flow graph from an abstract syntax tree corresponding to source code (234) of a user program (132; 258);
formulating (S23) an inter-variable dependence (280) by searching a variable which depends upon a variable used in the user program based on the control flow graph;
searching (S71, S72, S73, S74) a variable deemed to be a fixed value in variables used in the user program; and
updating (S76, S77) the inter-variable dependence by reflecting the variable deemed to be a fixed value on the source code.
